# EUROPEAN PATENT APPLICATION

(11) **EP 2 152 031 A1**
(43) Date of publication of application: **10.02.2010**
(21) Application number: 09166887.1
(22) Date of filing: 30.07.2009
(51) Int. Cl.: H04W 4/10

(54) **Transmitting dummy data by a PoC server for establishing a dedicated channel**

(30) Priority: 04.08.2008 JP 2008201062
(71) Applicant: FUJITSU LIMITED, Kawasaki-shi, Kanagawa 211-8588 (JP)
(72) Inventor: Ikeda, Eiji, Kawasaki-shi Kanagawa 211-8588 (JP)
(74) Representative: Wilding, Frances Ward

(57) **Abstract**

A communication method for a service controlling apparatus for providing terminals with a service includes receiving, from a first one of the terminals, a message indicating a transmission request of user data; and transmitting, to a second one of the terminals, dummy data to the second terminal to cause a transmission channel change of the second terminal.

## Description

### CROSS-REFERENCE TO RELATED APPLICATIONS

This application is based upon and claims the benefit of priority of prior Japanese Patent Application No.2008-201062, filed on August 4, 2008, the entire contents of which are incorporated herein by reference.

### FIELD

The embodiments of the present invention discussed herein relate to a communication method, a service controlling apparatus, and a recording medium.

### BACKGROUND

Standardization work for PoC (Push-to-talk over Cellular) is currently done by standardization groups, such as the OMA (Open Mobile Alliance).

PoC is an inter-group communication system based on half-duplex communication. With PoC, while multiple users cannot speak simultaneously, the contents of speech of a certain user can be distributed to all users in a group.

FIG. 9 is an example of the configuration of a network in a PoC system. As illustrated in FIG. 9, a PoC service allows for communication across different wireless networks A and B. Various types of processing in the wireless networks A and B are executed in accordance with corresponding system specifications.

FIG. 10 is an example of a sequence when a PoC service is provided in the network configuration illustrated in FIG. 9. In addition, FIG. 10 is an example in which a terminal (#0) 50 speaks and its voice data is transmitted to a terminal (#1) 60 and a terminal (#2) 70.

First, in steps S100 and S102, the terminals 50 to 70 perform connection processing on corresponding base stations in the wireless networks A and B (hereinafter, the base stations will be referred to as "wireless networks A and B"). In steps S101 and S103, the terminals 50 to 70 perform PoC-session participation processing on a PoC server 100 through wireless networks A and B. Consequently, the terminals 50 to 70 can receive a PoC service.

In step S104, the user (the terminal 50) who wishes to talk transmits, to the PoC server 100, a request to speak. In step S105, the PoC server 100 issues a permission to speak.

Subsequently, in step S106, the PoC server 100 transmits, to the terminals 60 and 70, control messages (speech advance-notice messages) that notify that a right to speak is granted to the terminal 50 and voice data is to be transmitted. In step S107, the terminal 50 transmits voice data. In step S108, the PoC server 100 replicates the voice data, the number of pieces of the voice data corresponding to the number of terminals at the transmission destinations, and transmits the voice data to the terminals 60 and 70 through the wireless network B.

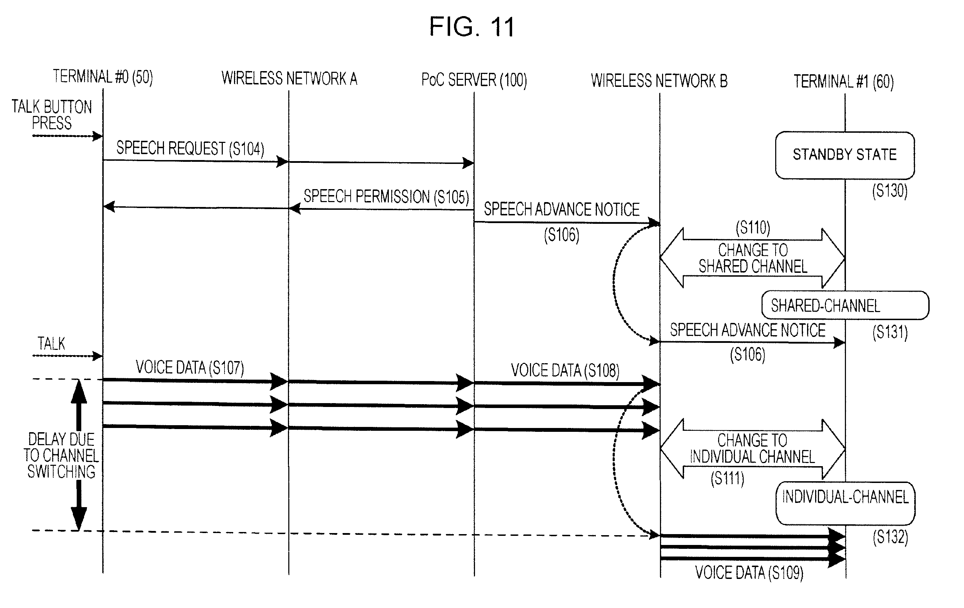

FIG. 11 is an example of a sequence of when a mobile communication system (a cellular system) based on the 3GPP (3rd Generation Partnership Project) or the like is used to provide a PoC service.

In terms of efficient use of radio resources and power saving of terminals, the cellular system performs control for switching a wireless channel in accordance with the amount of data. When the amount of data is large, an individual wireless channel is assigned to each terminal, and the amount of data is smaller than or equal to a predetermined amount, the individual (dedicated) channel is released and communication is performed on a shared channel. In addition, when there is no data for a predetermined amount of time, the wireless channel is released and the terminal enters an idling state and changes to a power-saving mode.

Upon receiving a speech advance-notice message from the PoC server 100, the wireless network B performs control for assigning a shared channel in step S110. As a result, in step S110, the terminal 60 changes from an idling state in step S130 to a shared-channel state in step S131. In step S106, a speech advance-notice message, which has a small amount of data, is transmitted to the terminal 60.

Thereafter, upon receiving voice data from the terminal 50, the wireless network B performs control for assigning an individual (dedicated) channel in step S111 since the voice data has a large amount of data. Thus, the terminal 60 changes to an individual (dedicated)-channel state in step S132. In step S109, the voice data is transmitted to the terminal 60.

### SUMMARY

During the control for assigning the individual (dedicated) channel (in step S111), the wireless network B transmits/receives control messages for establishing the individual (dedicated) channel to/from the terminal 60. During the processing, the wireless network B buffers the voice data transmitted from the terminal 50. As a result, the voice data is transmitted to the terminal 60 with a delay. Such a delay poses a problem for a real-time service.

According to one embodiment, the present invention includes a communication method for a service controlling apparatus for providing terminals with a service. The method comprises receiving, from a first one of the terminals, a message indicating a transmission request of user data. Additionally, the method transmits, to a second one of the terminals, dummy data to the second terminal to cause a transmission channel change of the second terminal.

The advantages of the invention will be realized and attained by means of the elements and combinations particularly pointed out in the claims.

It is to be understood that both the foregoing general description and the following detailed description are exemplary and explanatory and are not restrictive of the invention, as claimed.

Preferred features of the present invention will now be described, purely by way of example, with reference to the accompanying drawings, in which:

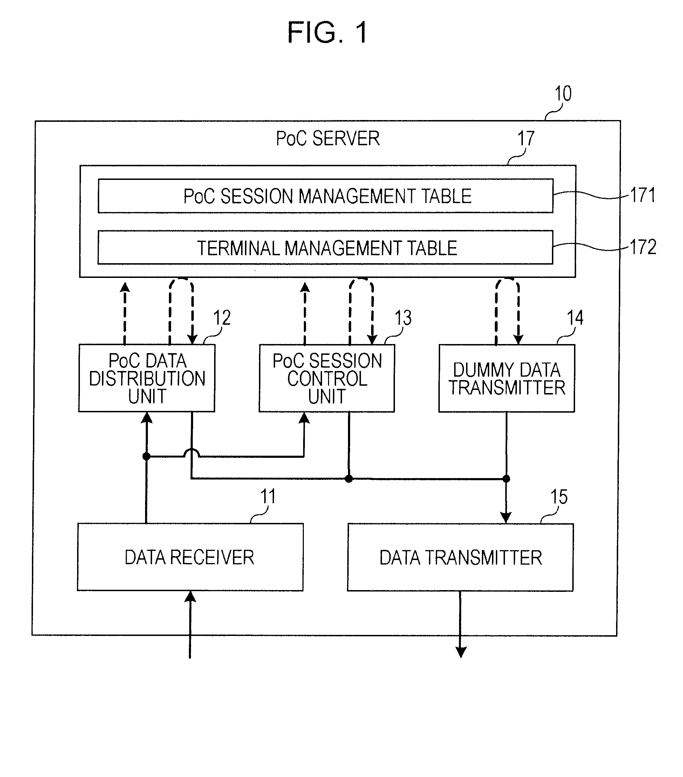

FIG. 1 is an example of a configuration of a PoC server as an embodiment.

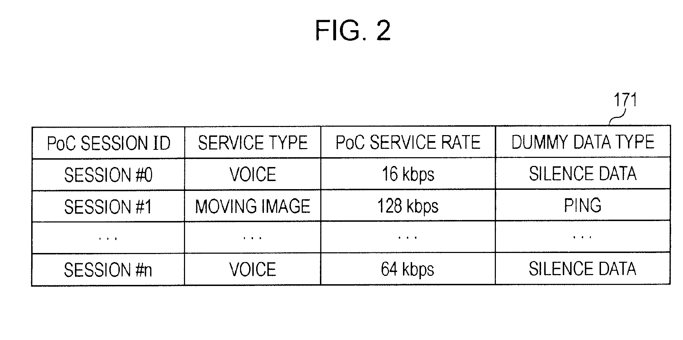

FIG. 2 is an example of a PoC session management table as an embodiment.

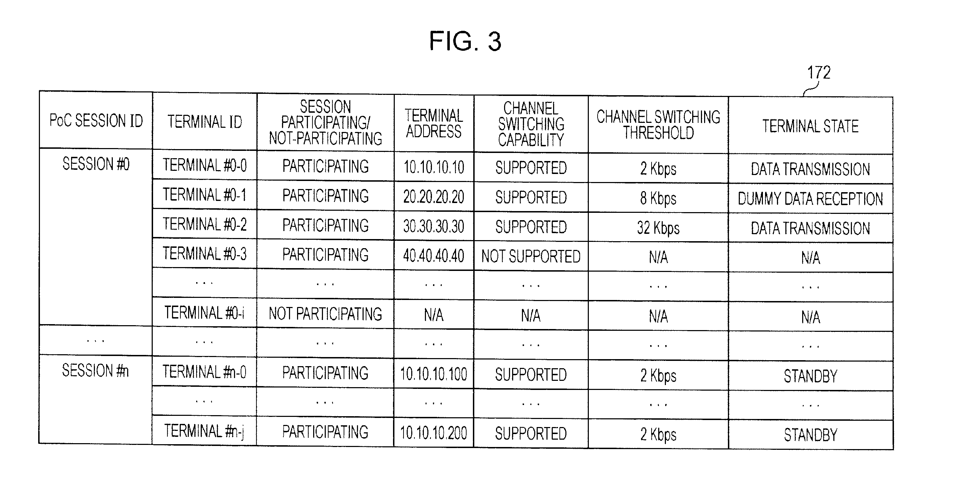

FIG. 3 is an example of a terminal management table as an embodiment.

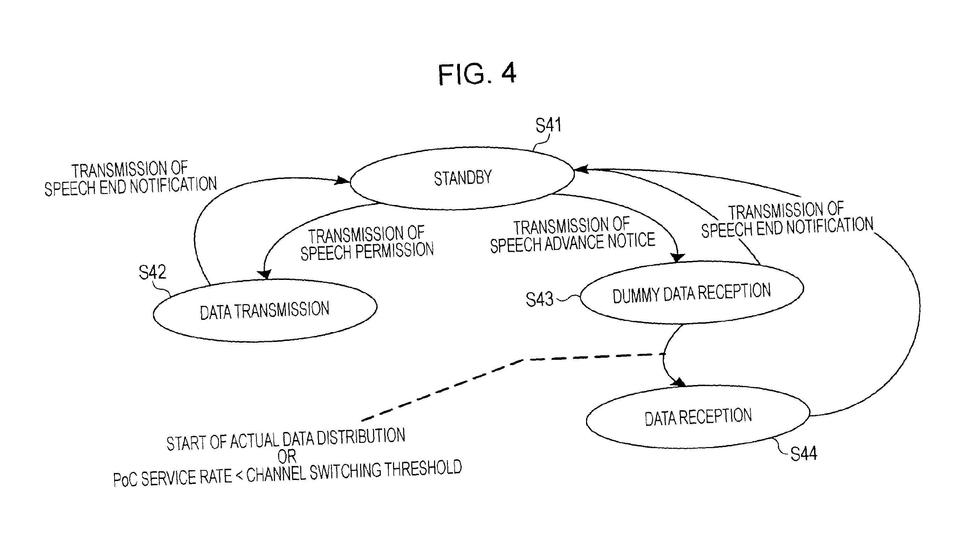

FIG. 4 is an example of change of a state as an embodiment.

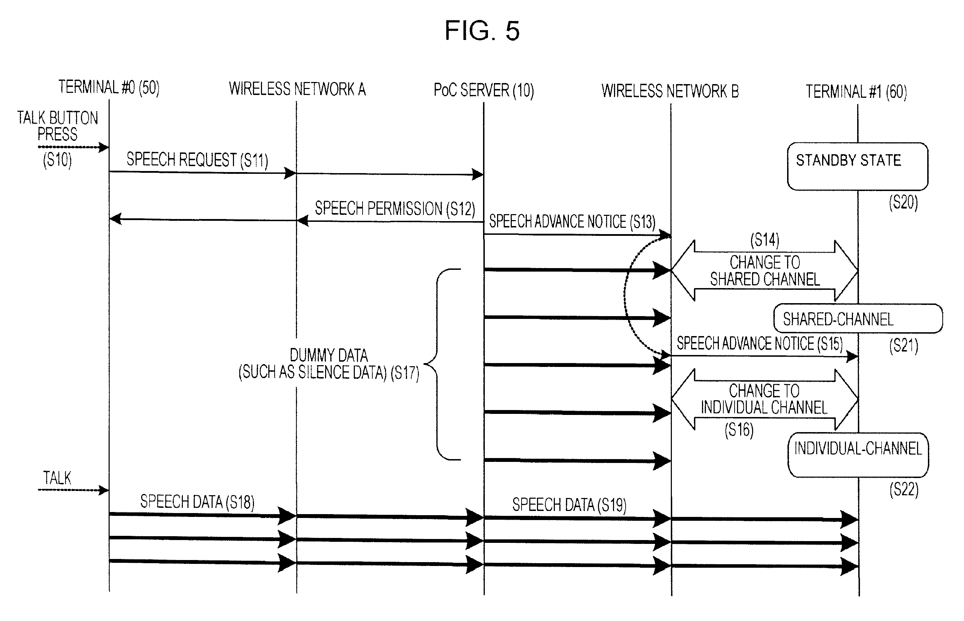

FIG. 5 is an example of a sequence of dummy data transmission as an embodiment.

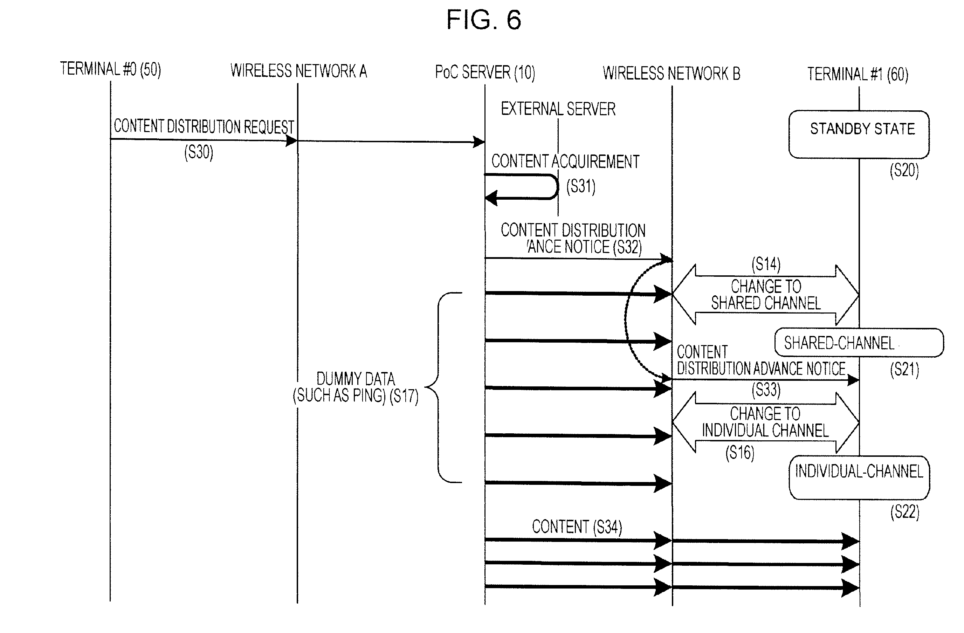

FIG. 6 is an example of a sequence of dummy data transmission as an embodiment.

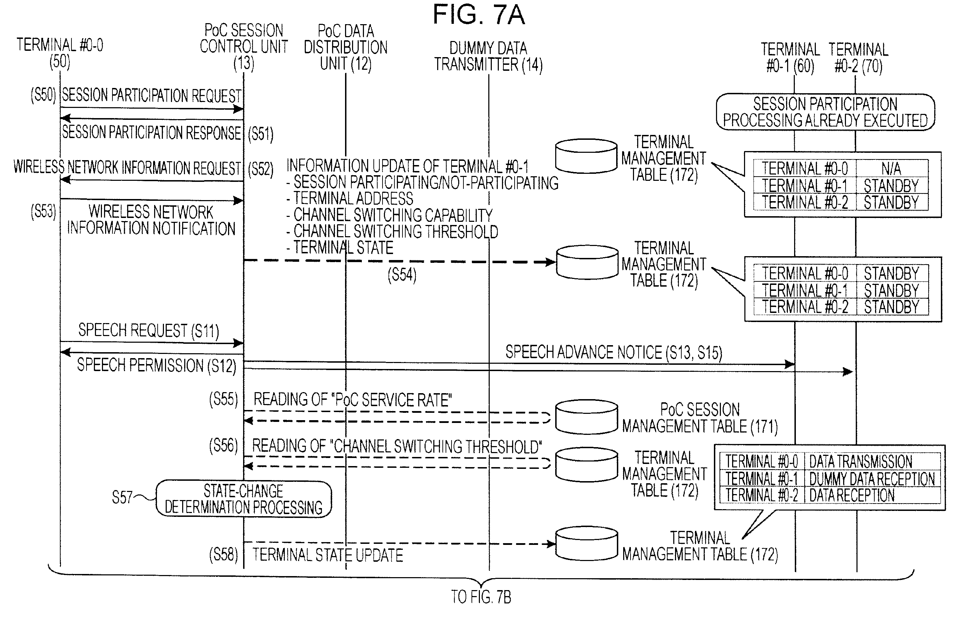

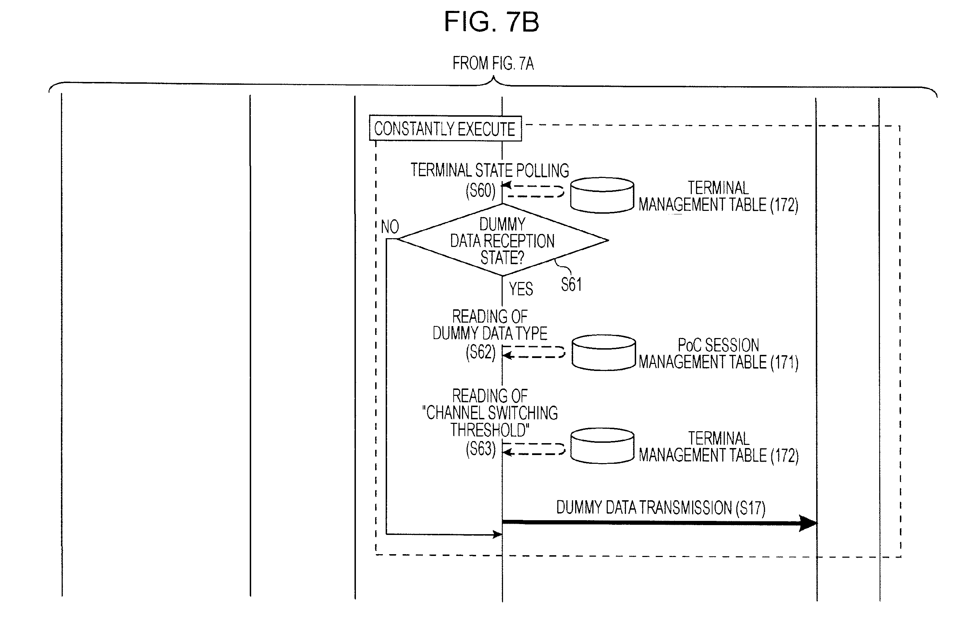

FIGS. 7A and 7B illustrate an example of a sequence of dummy data transmission as an embodiment.

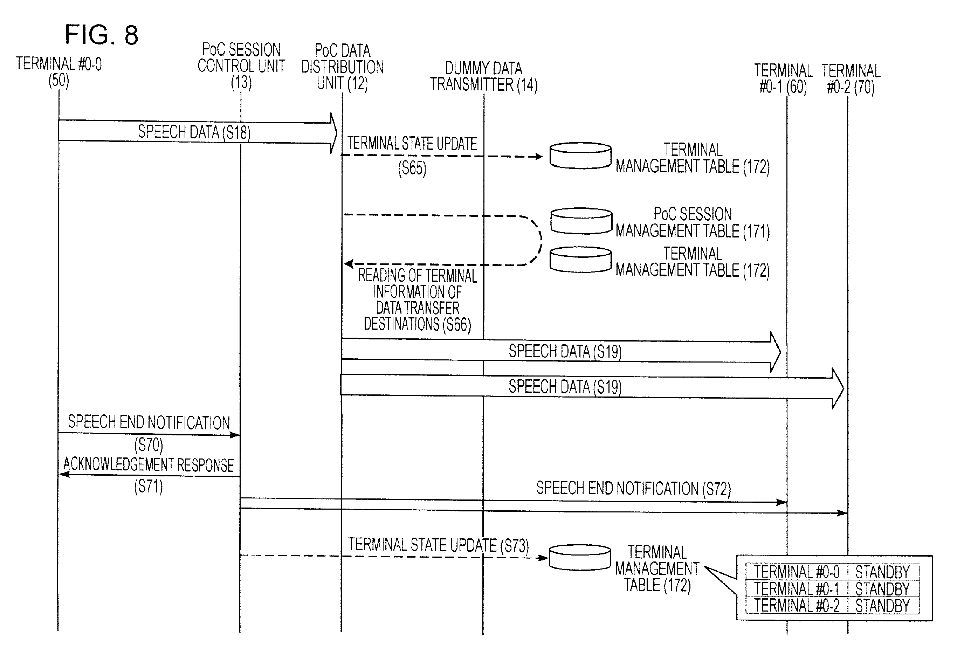

FIG. 8 is an example of a sequence of dummy data transmission as an embodiment.

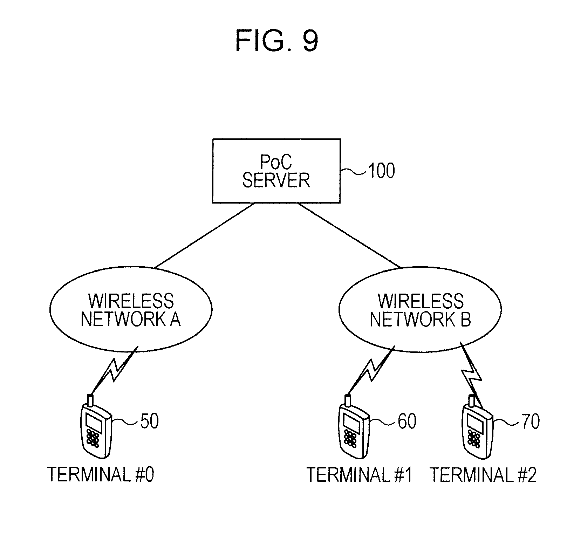

FIG. 9 is an configuration example of a network.

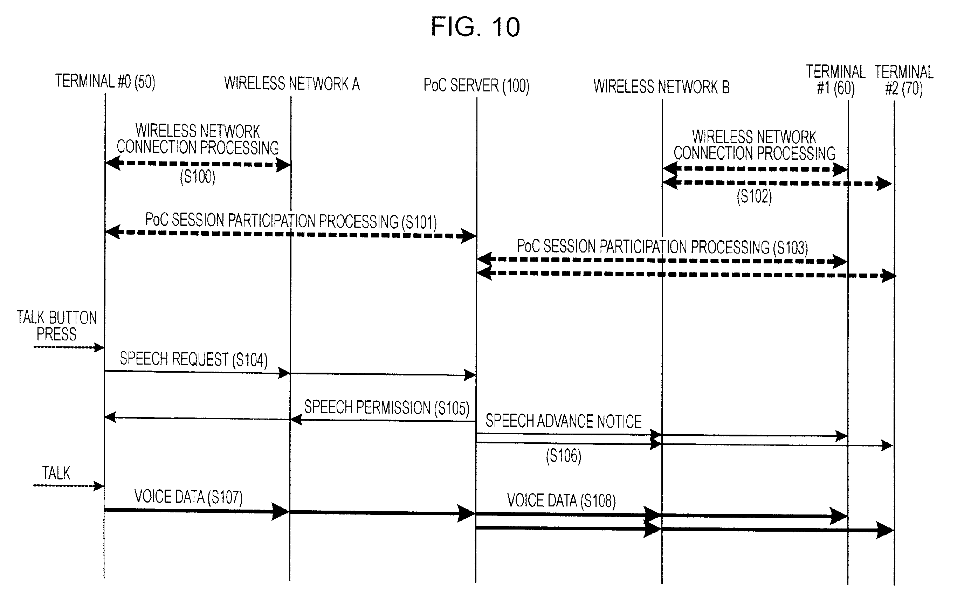

FIG. 10 is a sequence of a processing sequence of related art.
FIG. 11 is a sequence of a processing sequence of related art.

### DESCRIPTION OF EMBODIMENTS

Preferred embodiments of the present invention are explained with reference to the accompanying drawings.

FIG. 1 is an example of the configuration of a PoC server 10 that serves as a service controlling apparatus.

The PoC server 10 includes a data receiver 11, a PoC data distribution unit (hereinafter referred to as a "data distribution unit") 12, a PoC session control unit (hereinafter referred to as a "session control unit) 13, a dummy data transmitter 14, a data transmitter 15, and a storage unit 17.

The storage unit 17 preferably stores a PoC session management table 171 and a terminal management table 172. It is desirable for the data receiver 11 to receive data from terminals 50 to 70 in a network configuration as illustrated in FIG. 9. The data receiver 11 may then transfer the data to the data distribution unit 12 and the session control unit 13 in accordance with the contents of the data. For example, upon receiving user data, the data receiver 11 transfers the user data to the data distribution unit 12, and upon receiving a control message, the data receiver 11 transfers the control message to the session control unit 13.

The data distribution unit 12 may replicate the transferred user data and the number of pieces of the user data corresponding to the number of terminals that participate in a session. Thereafter, it outputs the replicated data to the data transmitter 15.

The session control unit 13 transmits/receives control messages to/from the individual terminals 50 to 70 and performs participation processing for a PoC session and arbitration processing for a right to speak. The session control unit 13 optionally accesses the PoC session management table 171 and the terminal management table 172, stored in the storage unit 17, to store or modify (update) information therein, as required. Details of the processing are described herein.

The dummy data transmitter 14 refers to the PoC session management table 171 and the terminal management table 172, stored in the storage unit 17. The transmitter 14 outputs, to the data transmitter 15, dummy data to be output to the terminals 50 to 70 that satisfy a condition. The "dummy data" in the present embodiment may be, for example, data such as silence data or a ping for reserving a communication path without interfering with various services provided by the PoC server 10.

The data transmitter 15 transmits the data, received from the data distribution unit 12, the session control unit 13, and the dummy data transmitter 14, to the terminals 50 to 70.

FIG. 2 is an example of the PoC session management table 171. For each ID that identifies a PoC session, the PoC session management table 171 is a table that stores a service type (voice, moving image, or the like) handled in the session, a service rate ("PoC service rate") for the service, and a dummy-data type (silence data, a ping, or the like). These pieces of information may be pre-stored, for example, before start of the service.

For example, by transmitting the ID of a desired session, each of the terminals 50 to 70 can participate in the session to receive a PoC service provided. In the present embodiment, the group of the terminals 50 to 70 can receive a service (a PoC service) for each session (PoC session).

FIG. 3 is an example of the terminal management table 172. For each PoC session ID, the terminal management table 172 stores terminal IDs and session participating/not-participating information with respect to all terminals that belong to the session. The terminal management table 172 stores, for the terminals 50 to 70 that participate in a session, the address information (such as IP addresses) of the terminals 50 to 70, information indicating whether or not channel switching (e.g., switching between a shared channel and an individual channel) is supported by wireless networks through which the terminals 50 to 70 are connected, rate thresholds at which the channel switching occurs when the channel switching is supported, and information indicating terminal states.

Of course, these are just examples. Those skilled in the art will recognize that the terminal management table 172 may store additional information depending on a particular application. Details of processing for storage, update, and so on of the tables 171 and 172 are described below.

Now, details of the "terminal state" stored in the terminal management table 172 will be described. FIG. 4 shown one aspect of an example of change of the terminal state. As illustrated in FIG. 4, the terminals 50 to 70 change among four states, i.e., "standby" (S41), "data transmission" (S42), "dummy data reception" (S43), and "data reception" (S44). These states are effective only for, of the terminals that participate in a PoC session, terminals whose "channel switching capability" information in the terminal management table 172 indicates "supported".

The "standby" state (S41) means a state in which the terminal is participating in a PoC session and all terminals including the participating terminal have not obtained a right to speak in the PoC session to which the participating terminal belongs.

The "data transmission" state (S42) means a state in which the PoC server 10 transmits a speech permission to the corresponding terminal to enable the terminal to speak (i.e., to transmit user data). When the PoC server 10 transmits a speech end notification, the terminal proceeds from the "data transmission" state (S42) to the "standby" state (S41).

The "dummy data reception" state (S43) means a state in which one terminal is granted permission to speak (to transmit user data) and the PoC server 10 transmits a speech advance-notice message to corresponding terminals. In the dummy data state, the PoC server 10 transmits dummy data to, for example, the terminals 60 to 70.

The "data reception" state (S44) also means a state in which user data is transmitted from the terminal granted the speech permission and is distributed to other terminals in the same session. In the data reception state, the PoC server 10 does not need to transmit dummy data.

When the PoC server 10 transmits a speech end notification in the "dummy data reception" state (S43) and the "data reception state" (S44), the terminals 50 to 70 proceed to the "standby" state (S41).

As described above, the terminals 50 to 70 change among the four states, and the session control unit 13 in the PoC server 10 stores or updates the state information in the "terminal information" fields in the terminal management table 172 through determination processing or in accordance with information received from the terminals 50 to 70.

Next, an exemplary operation is described.

FIG. 5 is an example of a sequence. In this example, in a network configuration as illustrated in FIG. 9, a terminal (#0) 50 transmits speech data and a terminal (#1) 60 receives the speech data (voice data). It is, however, assumed that the terminals 50 and 60 have already performed processing for participating in the same PoC session. It is also assumed that a wireless network B to which the terminal 60 belongs is a wireless network for, for example, a 3GPP (3rd Generation Partnership Project) or W-CDMA (Wideband Code Division Multiple Access) cellular system.

First, upon pressing of a talk button or the like in step S10, the terminal 50 transmits a speech request (e.g., a user-data transmission request) message to the POC server 10 in step S11. The speech request message is transmitted to the PoC server 10 via a base station in a wireless network A (hereinafter, the base station will be referred to as "wireless network A").

Subsequently, in step S12, the PoC server 10 transmits a speech permission to the terminal 50. Immediately after this point in time, the PoC server 10 can expect that speech data (voice data) will be transmitted from the terminal 50. Thus, the PoC server 10 not only transmits a speech advance-notice message in step S13 but also starts to transmit dummy data in step S17 to the wireless network B to which the terminal 60 belongs.

In step S14, the wireless network B performs processing for establishing a shared channel for transmitting the speech advance-notice message in step S15. Thereafter, in step S16, the wireless network B performs processing for establishing an individual channel with the terminal 60 due to transmission of the dummy data. The wireless network B may change the transmission channel from a shared channel to an individual (dedicated)channel if the amount of transmission data is larger than a predetermined threshold. Thus the amount of dummy data transmitted to respective terminals is larger than the threshold to change the transmission channel. The dummy data may be transmitted after the channel change to keep the individual channel.

In this case, since the individual channel with the terminal 60 has already been established when the speech data is transmitted from the terminal 50, the wireless network B may transmit the speech data to the terminal 60 in steps S18 and S19 via the individual channel without buffering the speech data.

As described above, in response to the speech request transmitted (in step S11) from the terminal 50, the PoC server 10 transmits dummy data in step S17. This arrangement may avoid user-data buffering involved in processing for establishing the individual channel in the wireless network B. Thus, the terminal 60 may receive a service in real time.

One example of the PoC service is a service for distributing content (an image, a moving-image, or the like) utilizing an external server to the terminals 50 to 70 in the group. FIG. 6 shows an exemplary embodiment of a sequence of a content distribution service provided by the PoC server 10.

First, in step S30, the terminal 50 transmits a content distribution request. In step S31, in response to the content distribution request, the PoC server 10 acquires content from an external server. In step S32, the PoC server 10 transmits a content distribution advance notice to the terminal 60 in the group.

In response to the content distribution request transmitted in step S30, the PoC server 10 starts to transmit dummy data (such as a ping) in step S17. Upon receiving the dummy data, the wireless network B performs processing for establishing an individual channel with the terminal 60 in step S16.

In step S34, the PoC server 10 transmits the content to the terminal 60. Since the individual channel with terminal 60 has been established, the wireless network B transmits the content to the terminal 60 without buffering the content. Thus, since the PoC server 10 transmits dummy data even for content distribution, the terminal 60 may receive the content without delay and may also receive a service in real time.

Now, an operation will be described in detail. FIGS. 7A, 7B, and 8 illustrate examples of sequences of detailed processing. In this example, speech data from a terminal (#0-0) 50 is transmitted to a terminal (#0-1) 60 and a terminal (#0-2) 70 belonging to a group in the same session.

In this embodiment, the terminals 60 and 70 belong to a cellular-system wireless network, as in the examples in FIGS. 5 and 6. It is also assumed that the terminals 50 and 60 have already performed processing for participating in the session and both of the "terminal states" in the terminal management table 172 with respect to the terminals 50 and 60 are "standby states".

It is further assumed that the terminal 50 has pre-accessed the PoC server 10 to perform session registration. As a result of the session registration, an entry of the terminal 50 is created in the terminal management table 172. However, in the terminal management table 172, the terminal state of the terminal 50 is N/A (a state in which no information is obtained). The terminal management table 172 in FIGS. 7A, 7B, and 8 shows only information of the terminal IDs and the terminal states.

First, in step S50, the terminal 50 transmits a session participation request to the PoC server 10. The session participation request is transmitted to the PoC server 10 through the wireless network. The session participation request contains, for example, the ID (#0) of the session in which the terminal 50 wishes to participate and the terminal ID (#0-0) of the terminal 50.

When the PoC server 10 receives the session participation request, the session control unit 13 generates a session participation response and transmits it to the terminal 50 in step S51. This session participation response permits the terminal 50 to participate in the session.

In step S52, the session control unit 13 transmits a request for wireless network information of the terminal 50 to the terminal 50 that participates in the session. Subsequently, in step S53, the terminal 50 transmits a notification indicating the wireless network information to the PoC server 10 as a response message for the requested wireless network information. The wireless network information contains, for example, "session participating/not-participating" information, "terminal address" information, "channel switching capability" information, "channel-switching threshold" information, and "terminal state" information ("standby") with respect to the terminal 50.

When the PoC server 10 receives the wireless network information, the session control unit 13 stores those pieces of information in the terminal management table 172 in step S54. The session control unit 13 updates the "session participating/not-participating " information in the terminal management table 172 to "participating", stores the "terminal address" of the terminal 50, stores "wireless-channel switching capability" information and "channel switching threshold" information, and further updates the "terminal state" information to "standby".

After transmitting the notification indicating the wireless network information in step S53, the terminal 50 transmits a speech request to the PoC server 10 in step S11.

In step S12, the session control unit 13 accesses the terminal management table 172, and transmits a speech permission to the terminal 50 on the basis of the "session participating/not-participating" information and so on. Upon receiving the speech request in step S11, the session control unit 13 also transmits speech advance notices to the terminals 60 and 70 in steps S13 and S15, respectively.

In addition, in response to the speech request transmitted in step S11, the session control unit 13 accesses the PoC session management table 171 and the terminal management table 172 in steps S55 and S56, respectively.

More specifically, in step S55, the session control unit 13 reads, from the PoC session management table 171, the "PoC service rate" of the session in which the terminal 50 participates. For example, the session control unit 13 uses a session ID key, contained in the session participation request, as a key to read a service rate "16 Kbps" for the session "session #0".

The session control unit 13 also reads, from the terminal management table 172, the "channel switching thresholds" of terminals that are participating in the session, out of the terminals that belong to the corresponding PoC session. For example, the session control unit 13 reads channel switching thresholds "8 Kbps" and "32 Kbps" of the terminals (#0-1) 60 and (#0-2) 70 that are participating in the same session "session #0".

Subsequently, in step S57, the session control unit 13 performs state-change determination processing. The determination is performed in the following manner. That is, the session control unit 13 causes a terminal to which the speech permission was transmitted to unconditionally change to the "data transmission" state. For example, the session control unit 13 causes the terminal state of the terminal 50 to change to the "data transmission" state.

With respect to a terminal to which the speech advance notice was transmitted, the session control unit 13 compares the read "PoC service rate" with the "channel switching threshold". When the "PoC service rate" is greater than or equal to the "channel switching threshold" (condition 1), the session control unit 13 causes the terminal state to change to the "dummy data reception" state. When the "PoC service rate" is smaller than the "channel switching threshold" (condition 2), the session control unit 13 causes the terminal state to change to the "data reception" state. When the "channel switching threshold" in the terminal management table 172 is "N/PA" (condition 3), the session control unit 13 causes the terminal state to change to the "data reception" state.

For example, since the PoC service rate for the session "session #0" is 16 Kbps and the channel switching threshold is 8 Kbps with respect to the terminal (#0-1) 60, the session control unit 13 causes the terminal state to change to the "dummy data reception" state. Also, since the channel switching threshold for the terminal (#0-2) 70 is 32 Kbps, the session control unit 13 causes the terminal state to change to the "data reception" state.

In step S58, the session control unit 13 stores (updates) the changed terminal-state information in the terminal management table 172. For example, the session control unit 13 updates the terminal state of the terminal (#0-0) 50 to the "data transmission" state, updates the terminal state of the terminal (#0-1) 60 to the "dummy data reception" state, and updates the terminal state of the terminal (#0-2) 70 to the "data reception" state.

In addition, in step S60, the dummy data transmitter 14 constantly monitors the "terminal state" fields in the terminal management table 172. When the terminal state in the terminal management table 172 is "dummy data reception" state (Yes, in step S61), the dummy data transmitter 14 transmits dummy data to all corresponding terminals in step S17. For example, since the terminal state of the terminal (#0-1) 60 is the "dummy data reception" state, the dummy data transmitter 14 transmits dummy data to the terminal 60 in step S17.

In this case, the dummy data transmitter 14 reads, from the terminal management table 172, the ID of the session to which the terminals to which the dummy data is to be transmitted belongs, and also reads the dummy data type for the session ID from the PoC session management table 171 in step S62.

Subsequently, in step S63, the dummy data transmitter 14 reads the channel switching threshold from the terminal management table 172. The dummy data transmitter 14 transmits dummy data corresponding to the dummy data type and transmits the dummy data at a larger rate (*i.e.,* at a larger transmission rate) than the channel switching threshold.

On the other hand, when the terminal state in the terminal management table 172 is not the "dummy-data reception" state (No in step S61), the dummy data transmitter 14 does not transmit dummy data. For example, the dummy data transmitter 14 does not transmit dummy data to the terminals 50 and 70.

Subsequently, in step S18 in FIG. 8, the terminal 50 transmits speech data to the PoC server 10 through the wireless network. The data distribution unit 12 in the PoC server 10 receives the speech data. Upon receiving the speech data, the data distribution unit 12 causes the terminal states of all terminals to which the speech data is to be distributed to change to the "data reception" states and updates, in the terminal management table 172, the terminal states of all corresponding terminals to the "data reception" states. For example, the data distribution unit 12 updates the terminal state of the terminal (#0-1) 60 from the "dummy data reception" state to the "data reception" state. As a result of this change, the transmission of the dummy data from the dummy data transmitter 14 is stopped.

Subsequently, in step S66, the data distribution unit 12 reads the terminal information (the terminal addresses) of the data transfer destinations from the PoC session management table 171 and the terminal management table 172. In step S19, the data distribution unit 12 replicates the speech data and transmits the replicated speech data to the terminals 60 and 70.

The speaking processing of the terminal 50 is finished in the following case. That is, upon receiving a speech end notification from the terminal 50 in step S70, the session control unit 13 transmits an acknowledgement response in step S71. In step S72, the session control unit 13 transmits speech end notifications to, except the terminal 50, all terminals 60 and 70 that are participating in the session.

Subsequently, in step S73, the session control unit 13 accesses the terminal management table 172 to cause the terminal states of all terminals that are participating in the session to change to the "standby" states.

As described above, in the examples in FIGS. 7A, 7B, and 8, the PoC server 10 also transmits dummy data in response to the speech request transmitted (in step S11) from the terminal 50. Thus, the wireless network can transmit user data (the speech data in this example), transmitted from the terminal 50, to the terminals 60 and 70 without buffering the user data. Consequently, it is possible to ensure a real-time service.

In addition, the PoC server 10 is configured so as to transmit dummy data when the data rate of user data to be transmitted is greater than or equal to the threshold (the channel switching threshold) for switching the wireless channel from a shared channel to an individual (dedicated) channel and so as not to transmit dummy data when the data rate of user data to be transmitted is smaller than the threshold.

That is, the PoC server 10 in the present embodiment is configured so as to transmit dummy data when user data to be transmitted has the amount for switching the channel to an individual channel (condition 1 described above) and so as to transmit user data while maintaining a shared channel without switching the channel to an individual channel (i.e., without transmitting dummy data) when the user data to be transmitted does not have the amount of data for switching the channel to an individual channel (condition 2 described above). In addition, when the wireless channel through which the terminal performs communication does not support a channel switching capability (condition 3 described above), the PoC server 10 transmits user data without transmitting dummy data. Thus, the PoC server 10 can efficiently utilize wireless channel resources since unwanted transmission of dummy data is not preformed.

In the present embodiment, since the PoC server 10 performs the processing, the base stations, the terminals, and peripheral nodes in the wireless networks may be used without any change. It is, therefore, possible to reduce cost. Furthermore, since the amount of delay in a PoC service can also be reduced, the PoC server 10 can contribute to spreading of the PoC service.

The PoC server 10 has been described in the above examples as including two tables 171 and 172, the data distribution unit 12, the session control unit 13, and the dummy data transmitter 14. For example, these configurations may be provided in a base-station apparatus or another node apparatus in the wireless networks.

Two separated tables, i.e., the PoC session management table 171 and the terminal management table 172, have been described in the above examples. The tables 171 and 172, however, may be configured as one table.

In a control method for a wireless network for switching a channel, used for transmission, from a shared channel to an individual channel in accordance with the amount of data transmitted to a terminal, in a period from when a transmission advance notice for the terminal is transmitted to a wireless network until user data is transmitted to the terminal, the wireless-network controlling apparatus transmits, to the wireless network, data having an amount of data for starting control for switching from the shared channel to the individual channel.

It is possible to provide a communication method, a service controlling apparatus, and a recording medium which ensure real-time processing.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A communication method for a service controlling apparatus for providing terminals with a service, the communication method comprising:
receiving, from a first one of the terminals, a message indicating a transmission request of user data; and
transmitting, to a second one of the terminals, dummy data to the second terminal to change a transmission channel to a higher transmission channel that the transmission channel.

2. The communication method according to claim 1,
wherein an amount of the dummy data is equal to or larger than a threshold that a network to which the second terminal belongs changes the transmission channel to the higher transmission channel.

3. The communication method according to claim 1 or 2,
wherein the dummy data is transmitted when a transmission rate of the user data is greater than or equal to a threshold indicating switching of the transmission channel.

4. The communication method according to any of the preceding claims, further comprising storing a transmission rate of the user data in a storage unit,
wherein a threshold transmitted from the second terminal is received, and the transmission rate stored in the storage unit is compared with the received threshold to determine whether or not the transmission rate is greater than or equal to the received threshold.

5. The communication method according to any of the preceding claims, wherein silence data or a ping is transmitted as the dummy data.

6. The communication method according to any of the preceding claims, wherein the transmission of the dummy data is stopped in response to transmission of the user data from the first terminal.

7. The communication method according to any of the preceding claims, wherein the dummy data is transmitted when the second terminal is operable to switch the transmission channel.

8. The communication method according to any of the preceding claims, wherein the service corresponds to a service for push-to-talk over cellular.

9. A service controlling apparatus for providing terminals with a service, the service controlling apparatus comprising:
a receiver that receives, from a first one of the terminals, a message indicating a transmission request of user data; and
a transmitter that transmits, to a second one of the terminals, dummy data to the second terminal to cause a transmission channel change of the second terminal.

10. The service controlling apparatus according to claim 9, wherein the transmitter transmits the dummy data when a transmission rate of the user data is greater than or equal to a threshold indicating switching of the transmission channel.

11. The service controlling apparatus according to claim 9 or 10, further comprising:
a storage unit that stores a transmission rate of the user data,
wherein the receiver receives a threshold transmitted from the second terminal, and the transmitter compares the transmission rate stored in the storage unit with the threshold received by the receiver to determine whether or not the transmission rate is greater than or equal to the received threshold.

12. The service controlling apparatus according to claim 9, 10 or 11, wherein the transmitter transmits silence data or a ping as the dummy data.

13. The service controlling apparatus according to any of claims 9 to 12, wherein the transmitter stops the transmission of the dummy data in response to a transmission of the user data from the first terminal.

14. The service controlling apparatus according to any of claims 9 to 13, wherein the transmitter transmits the dummy data when the second terminal are operable to switch the transmission channel.

15. The service controlling apparatus according to any of claims 9 to 14, further comprising:
a control unit that causes states of the second terminal to change in accordance with information or the message transmitted from the first terminal,
wherein, when the message is received, the control unit causes the state of the second terminal to change to a state that enables reception of the dummy data, and when the second terminal is in the state that enables reception of the dummy data, the transmitter transmits the dummy data.

16. The service controlling apparatus according to any of claims 9 to 15, wherein the service corresponds to a service for push-to-talk over cellular.

17. A recording medium storing a program for a computer that provides terminals with a service, the program causing the computer to execute:
processing for receiving, from a first one of the terminals, a message indicating a transmission request of user data; and
processing for transmitting, to a second one of the terminals, dummy data to the second terminal to cause a transmission channel change of the second terminal.
